# EUROPÄISCHE PATENTSCHRIFT

(11) **EP 3 878 653 B1**
(45) Veröffentlichungstag und Bekanntmachung des Hinweises auf die Patenterteilung: **08.07.2026**
(21) Anmeldenummer: 20162299.0
(22) Anmeldetag: 11.03.2020
(51) Int. Cl.: B41F 33/00, B41J 2/21, G01N 21/956, G06T 7/00

(54) **INSPEKTION MIT FEHLERKLASSIFIZIERUNG**
INSPECTION WITH ERROR CLASSIFICATION
INSPECTION COMPRENANT UNE CLASSIFICATION D'ERREURS

(43) Veröffentlichungstag der Anmeldung: 15.09.2021
(73) Patentinhaber: Heidelberger Druckmaschinen AG, 69115 Heidelberg (DE)
(72) Erfinder: Soltwedel, Frank, 74889 Sinsheim/Hoffenheim (DE); Müller, Robert, 69509 Mörlenbach (DE); Krieger, Jan, 69124 Heidelberg (DE); Schumann, Frank, 69118 Heidelberg (DE); Eisele, Peter, 76684 Östringen (DE)

(56) Entgegenhaltungen:
- US-A1- 2008 212 844
- US-A1- 2009 188 405
- US-A1- 2015 273 816
- US-B1- 7 570 797

## Beschreibung

Das erfindungsgemäße Verfahren beschäftigt sich mit einem Verfahren zur Bildinspektion von Druckerzeugnissen, welches mit spezifischen Fehlerbehebungen mittels klassifizierter Fehlerarten arbeitet.

Die Erfindung liegt im technischen Gebiet der Bildqualitätskontrolle.

Anlass für die Erfindung ist die Problematik der Bildinspektion mittels eines Bilderfassungssystems für Offsetdruckmaschinen als Doppelsystem im Schön- und Widerdruck. Hierbei geht es darum, in einer Anzeige, wie z. B. einem Wallscreen einer Druckmaschine, dem Drucker als Anwender eine visuelle Rückmeldung über gefundene Abweichungen zu geben, ohne ihn durch zu viel Dynamik in der Anzeige zu behindern.

Es geht dabei um 2 Hauptthemen:
1. Eine reduzierte und einfachere Anzeige von Abweichungen zum schnellen Aufnehmen der Ist-Situation auch bei hohen Druckgeschwindigkeiten.
2. Eine grafische und/oder textliche Rückmeldung als Ableitung aus den gefundenen Abweichungen, aus denen der Drucker schneller das Problem und eine Handlung ableiten kann.

Als Stand der Technik hierzu ist bekannt, Abweichungen als Fehlerbilder in einer Anzeige zu verwenden und sie bei Bedarf im Wechsel mit Referenzbild einzublenden. Das als Inspektionssystem verwendete Bilderfassungssystem stellt dabei lediglich die Abweichungen als Bild zur Verfügung. Eine Ableitung aus den Abweichungen wird nicht vorgenommen, da die Systeme über keine künstliche Intelligenz verfügen. Der Drucker muss daher seinerseits die Fehlerbilder erfassen, interpretieren und notwendige Maßnahmen daraus ableiten. Dabei kann es zu einer Anhäufung von darzustellenden Abweichungen kommen, wenn auf dem inspizierten Druckbogen mehrere Abweichungen gleicher und/oder verschiedener Art gefunden werden.

Die Nachteile dieses Standes der Technik liegen auf der Hand. Sie sind insbesondere die hohe Last in der Datenübertragung in Form von digital erfassten Druckbildern bei vielen Abweichungen, die Anhäufung von wechselnden Fehleranzeigen bei hohen Druckgeschwindigkeiten, die notwendige Interpretation aller Anzeigen durch den Drucker und dass Fehlerbilder vom Anwender erfasst und interpretiert werden müssen.

Dies wird im Stand der Technik meist dadurch behoben, dass man eine Reduktion der Meldungen über "Weglassen" von Informationen oder Speichern der Daten in einer Historie, die ihm später als Daten zur Verfügung gestellt werden durchführt. Damit ist allerdings eine Verzögerung in der Handlung des Anwenders im laufenden Druckprozess verbunden. Die Kunst wäre es hier dem Drucker möglichst keine Informationen vorzuenthalten und dennoch eine ruhige Anzeige zur Verfügung zu stellen, so dass er in der Lage ist, auch bei hohen Geschwindigkeiten die Sachlage zu erfassen und zu handeln.

DE 10 2017 216260 A1 offenbart dabei ein Verfahren zum Makulaturmanagement in einer Bedruckstoffe verarbeitenden Maschine mittels eines Rechners, wobei im Rahmen des Makulaturmanagements Sensoren, insbesondere in Form eines Bilderfassungssystems mit mindestens einem Bildsensor, von den gedruckten Druckerzeugnissen Druckbilder erfassen und mit einer digitalen Referenz abgleichen und im Falle von Abweichungen der erfassten Druckbilder von der digitalen Referenz die fehlerhaft erkannten Druckerzeugnisse ausgeschleust werden, und welches dadurch gekennzeichnet ist, dass Makulaturprofile erstellt werden, welche Parameter enthalten denen jeweils bestimmte Aktionen zugeordnet werden und für von der digitalen Referenz abweichende im Rahmen der Bildinspektion erfasste Druckbilder in Abhängigkeit der Parameter die bestimmten Aktionen durchgeführt werden, wobei unterschiedliche Endgeräte jeweils abhängig von den bestimmten Aktionen angesteuert werden.

Die japanische Patentanmeldung JP 2005 205797 offenbart ein Bilderzeugungsgerät zur einfachen und schnellen Klassifizierung der Qualität nach Art und Inhalt einer Drucksache.

Bestandteil ist eine Drucksachenprüfsteuervorrichtung, die die Prüfung einer Drucksache steuert, die durch eine Bilderzeugungsvorrichtung gedruckt wurde und bildet auf einem Blatt durch eine Dokumentbilddatenerfassungseinheit und ein Bilderzeugungsgerät basierend auf den Dokumentbilddaten. Zudem Mittel zum Erfassen von Inspektionsbilddaten, die aus dem gedruckten Ergebnisbild gelesen wurden, Qualitätsbestimmungsmittel zum Erfassen von Bildfehlern auf der Grundlage der Dokumentbilddaten und der Inspektionsbilddaten und zum Klassifizieren der Qualität der Drucksache in mehrere Qualitätsklassen. Bei der Qualitätsbestimmung bedeutet dies, dass die Prüfung der Druckqualität entweder zwischen einem Modus zum Trennen der Qualität des Druckmaterials in eine nicht fehlerhafte Produktklasse oder eine fehlerhafte Klasse unterscheiden kann oder zwischen einem Modus zum Trennen der Qualität des Druckmaterials in eine nicht fehlerhafte Produktklasse, eine fehlerhafte Klasse oder eine mittlere Qualitätsklasse.

Die Patentanmeldung US 2009/0188405 A1 zeigt eine Rollenrotationsdruckmaschine, welche eine Einrichtung aufweist, mit der eine kontaktlose Identifizierungseinrichtung in Form eines RFID-Chips auf das Druckmaterial aufgebracht werden kann. Weiterhin sind wenigstens eine Bildinspektionsvorrichtung sowie eine Testvorrichtung zur Testung der RFID-Chips vorhanden. Des Weiteren ist eine Stapelaufnahme vorhanden, welche defekte Bedruckstoffe aufnehmen und aussortieren kann. Die Bildinspektionseinrichtung ist dazu vorgesehen, die Druckqualität mittels einer Kamera zu beurteilen. Dabei werden mittels eines Lernalgorithmus Referenzwerte erzeugt, welche in einem Farbmodell und einem Farbintensitätsmodell erzeugt werden und mit den Werten der Bildinspektionseinrichtung verglichen werden. Während des Lernvorgangs erfasst ein Rechner die Daten der Bildinspektionseinrichtung und entscheidet, ob ein Bedruckstoff so weit fehlerfrei ist, dass er für den Lernvorgang sinnvoll genutzt werden kann. Somit werden schlechte Bedruckstoffe nicht für den Lernvorgang genutzt. Dem Bediener der Druckmaschine können mehrere Fehlertypen auf einem Bildschirm angezeigt werden.

Aus der Patentanmeldung US 2008/0212844 A1 ist ein Verfahren für die frühe Identifizierung von Abweichungen im Druckbetrieb bekannt. Dabei wird ein gerade erzeugtes Druckbild mit einem Referenzbild verglichen und die Abweichungen werden mittels zweier Schwellwerte beurteilt. Dabei findet eine Klassifizierung in gute und schlechte Bedruckstoffe statt.

Aus der Patentanmeldung US 2015/0273816 A1 ist ein Verfahren zur Überprüfung der Zuverlässigkeit bei der Erkennung von Druckfehlern eines Bildinspektionssystems bekannt. Dabei werden mittels eines Computers einem Druckbild vorher festgelegte und bekannte Fehler überlagert und anschließend eine Bildinspektion auf einem mit den vorbestimmten bekannten Fehlern produzierten Bedruckstoff durchgeführt. Die dabei aufgefundenen Fehler werden mit den vorgegebenen Fehlern verglichen. Je mehr vorbekannte Fehler das Bildinspektionssystem findet, desto zuverlässiger arbeitet die Fehlererkennung des Bildinspektionssystems. Auf diese Art und Weise kann die Zuverlässigkeit von Bildinspektionssystemen getestet werden.

Aus dem Patent US 7,570,797 B1 sind ein Verfahren und eine Vorrichtung zur Erzeugung eines Inspektionsprozesses für ein Inspektionssystem bekannt. Dabei werden mittels eines Computers Inspektionsdaten eines zu untersuchenden Objekts erzeugt, wobei verschiedene Bildinspektionsparameter erfasst werden. Bei dem Verfahren wird bestimmt, welche der verschiedenen Bildinspektionsparameter das beste Inspektionsergebnis für den jeweils ausgewählten Fehler produziert.

Der Stand der Technik offenbart jedoch keine Klassifizierung bestimmter gefundener Druckfehler nach ihren Fehlerarten. Er ermöglicht somit keine zielgerichtete Beseitigung möglicher Fehlerursachen auf Basis der mittels der Bildinspektion gefundenen Druckfehler.

Die Aufgabe der vorliegenden Erfindung besteht somit darin, ein Bildinspektionsverfahren für eine Druckmaschine zu offenbaren, welches eine effizientere Fehlerbeseitigung gefundener Druckfehler ermöglicht.

Gelöst wird diese Aufgabe durch ein Verfahren zur Bildinspektion von Druckerzeugnissen in einer Bedruckstoffe verarbeitenden Maschine mittels eines Rechners, wobei im Rahmen der Bildinspektion durch ein Bilderfassungssystem die produzierten Druckerzeugnisse mittels mindestens eines Bildsensors erfasst und digitalisiert werden, wobei der Rechner diese mit einem digitalen Referenzbild abgleicht und im Falle von Abweichungen der erfassten Druckbilder vom digitalen Referenzbild die fehlerhaft erkannten Druckerzeugnisse ausgeschleust werden, welches dadurch gekennzeichnet ist, dass der Rechner die im Rahmen der Bildinspektion gefundenen Abweichungen, sowie weitere Daten aus anderen Teilsystemen und der Maschine als gefundene Fehler auswertet, daraus mittels maschineller Lernverfahren bestimmte Fehlerklassen und ihre Ursachen ermittelt, die in der Bildinspektion gefundenen Fehler entsprechend den Fehlerklassen zuweist und die gefundenen Fehler, samt Fehlerklassen und Ursachen einem Bediener der Maschine mittels eines Displays anzeigt, welcher dann spezifische Maßnahmen zur Behebung der Fehlerursachen einleitet. Entscheidender Unterschied zum bisherigen Stand der Technik ist somit, dass im erfindungsgemäßen Verfahren aus den gefundenen Bildfehlern Druckfehlerarten und ihre Ursachen ermittelt werden, diese dann klassifiziert werden und dann die gefundenen Fehler den Druckfehlerarten zugewiesen werden. Diese können dann dem Bediener der Maschine auf einem Display entsprechend angezeigt werden, wodurch der Bediener in die Lage versetzt wird, mit dem Wissen über die gefundenen Bild- und damit Druckfehler und ihre Ursachen die entsprechenden Druckfehler sofort und effizient abzustellen.

Vorteilhafte und daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass der Rechner die derart klassifizierten Fehler gruppiert über das digitale Referenzbild gelegt auf dem Display dem Bediener der Maschine als Gruppe anzeigt. Mit dieser effizienten Art, die gefundenen und klassifizierten Fehler auf dem Display dem Bediener anzuzeigen, wird massiv Zeit eingespart, da der Bediener sich nicht mehr jeden einzelnen gefundenen Fehler einzeln anschauen muss, um dann zu bewerten, welcher Druckfehler diesem gefundenen Fehler eventuell zugrunde liegen könnte, um dann einzeln entsprechende Maßnahmen einzuleiten, sondern der Bediener bekommt sofort sämtliche Bildfehler, die von einer bestimmten Klasse von Druckfehlern verursacht werden könnten, kopiert angezeigt und kann damit sofort bewerten, wie schlimm sich die entsprechenden Druckfehler auf die Bildqualität auswirken und diese sofort, soweit es ihm möglich ist, effizient abstellen.

Eine weitere bevorzugte Weiterbildung des erfindungsgemäßen Verfahrens ist dabei, dass für jede Fehlerklasse auf dem Display ein Icon oder Textbaustein vorhanden ist, welches die Fehlerklasse dem Bediener offenbart und die Gruppe von einzelnen klassifizierten Fehler jeweils in Verbindung mit dem Icon oder Textbaustein dem Bediener angezeigt wird. Das Icon oder der Textbaustein wird dabei bevorzugt auf dem Rand des Displays angezeigt und leuchtet z. B. auf, während die Gruppe entsprechend klassifizierter Bild- bzw. Druckfehler gleichzeitig auf dem Display angezeigt wird. Im Falle der Verwendung eines Icons muss dem Bediener natürlich eine entsprechende Legende bezüglich der Bedeutung der einzelnen Icons zur Verfügung stehen.

Eine weitere bevorzugte Weiterbildung des erfindungsgemäßen Verfahrens ist dabei, dass der Rechner die gefundenen klassifizierten Fehler als Gruppe im digitalen Referenzbild mit Ortsbezug anzeigt. D. h. die Gruppe der gefundenen Bild- bzw. Druckfehler wird mit einer entsprechenden Markierung überall dort auf dem genauen Ort des digitalen Referenzbildes auf dem Display angezeigt, wo diese mittels des Bildinspektionssystems und des von ihm umgesetzten Verfahrens entsprechend detektiert wurden. Eine weitere bevorzugte Weiterbildung des erfindungsgemäßen Verfahrens ist dabei, dass die Fehlerklassen typische drucktechnische Probleme, wie Butzen, Schmieren, umgeknickte Papierkanten, Registermessung, Farbmessung, Überwachung defekter Düsen einer Digitaldruckmaschine und Whitelines im Druckbild umfassen. Die verwendeten Fehlerklassen sollten sich dabei auf drucktechnische Probleme wie z. B. die genannten beschränken, da dem Bediener der Druckmaschine vor allem die Behebung dieser Arten von Druckfehlern bzw. Bildfehlern möglich ist. Weitere Arten von gefundenen Fehlern, die z. B. aus einer falschen Konfiguration des Bilderfassungssystems, welches zur Bildinspektion verwendet wird, resultieren, sollten dem Bediener auf andere Art und Weise vom Bilderfassungssystem über das Display angezeigt werden.

Eine weitere bevorzugte Weiterbildung des erfindungsgemäßen Verfahrens ist dabei, dass der Rechner aus der bestimmten Fehlerklasse und der ermittelten Ursache einen Reaktionsvorschlag ableitet, diesen dem Bediener auf dem Display anzeigt, und der Bediener nach manueller Prüfung des Vorschlags diesen umsetzt. In einer Weiterführung des erfindungsgemäßen Verfahrens kann der Rechner, wenn er einmal die ermittelte Ursache für den auftretenden Bild- bzw. Druckfehler ermittelt hat und diese dem Rechner bekannt ist, auch einen entsprechenden Reparaturvorschlag anbieten, welche der Bediener dann nach Prüfung dieses Vorschlages umsetzen sollte. Auf diese Art und Weise können insbesondere unerfahrene Bediener bezüglich einer schnellen und effizienten Fehlerbehebung unterstützt werden.

Eine weitere bevorzugte Weiterbildung des erfindungsgemäßen Verfahrens ist dabei, dass der Rechner aus der bestimmten Fehlerklasse und der ermittelten Ursache einen Reaktionsvorschlag ableitet, und diesen automatisch umsetzt. Neben der Möglichkeit einen Reaktionsvorschlag zur Fehlerbehebung dem Bediener auf dem Display anzuzeigen, damit dieser nach Prüfung des Vorschlages diesen selbst umsetzen kann, ist es zudem auch möglich, bestimmte Fehlerarten am Rechner automatisch zu beheben, sofern die entsprechende Fehlerart für eine automatische Behebung geeignet ist. Für diesen Fall muss der Rechner natürlich Zugriff auf die Steuerung bzw. den Steuerungsrechner der Druckmaschine haben bzw. mit diesem identisch sein. Dabei ist auch eine Kombination beider Vorgehensarten denkbar. Z. B. können die Fehlerarten, welche für eine automatische Behebung geeignet sind, vom Rechner automatisch behoben werden, wohingegen die Fehlerarten, die manuell vom Bediener zu beheben sind, derart behandelt werden, dass der Rechner hier dem Bediener den Reaktionsvorschlag auf dem Display anzeigt.

Eine weitere bevorzugte Weiterbildung des erfindungsgemäßen Verfahrens ist dabei, dass der Rechner Daten über die klassifizierten Fehler erfasst und statistisch auswertet und daraus Vorschläge zur Fehlervermeidung ableitet, dem Bediener auf dem Display anzeigt, und der Bediener nach manueller Prüfung die Vorschläge umsetzt oder verwirft. Dies ist eine weitere alternative Vorgehensweise, wobei hier der Rechner anstatt aus der ermittelten Fehlerursache einen spezifischen Reaktionsvorschlag fest aus der Datenbank abzuleiten die vorhandenen Daten über die klassifizierten Fehler statistisch auswertet und mittels dieser statistischen Auswertung Vorschläge zur Fehlervermeidung ableitet. Auch diese Vorgehensweise kann ergänzend oder alternativ zu den beiden vorher genannten Vorgehensweisen durchgeführt werden.

Eine weitere bevorzugte Weiterbildung des erfindungsgemäßen Verfahrens ist dabei, dass die Klassifizierung der Fehler durch den Rechner von Parametern abhängig ist, welche zunächst mit Standardwerten im Auslieferzustand fest definiert sind und danach mittels des Rechners im Rahmen der Bildinspektion angepasst, bzw. trainiert werden. D. h. die maschinellen Lernverfahren, mittels derer die bestimmten Fehlerarten und ihre Ursachen ermittelt werden, sind bezüglich ihrer verwendeten Parameter am Anfang im Auslieferzustand mit Standardwerten fest definiert. Im Rahmen der Anwendung des erfindungsgemäßen Verfahrens werden diese dann jedoch mit neuen Daten eintrainiert, wodurch die Arbeitsweise des erfindungsgemäßen Verfahrens verbessert bzw. gar erst ermöglicht wird.

Eine weitere bevorzugte Weiterbildung des erfindungsgemäßen Verfahrens ist dabei, dass die Parameter vom Rechner mittels Veränderung der Voreinstellungen an der Maschine, Anpassung der Parameter über die Druckauftragsdaten, Bezug über eine zentrale Datenbank oder durch Interaktion mit dem Bediener trainiert werden. Dies sind nur die gebräuchlichsten Vorgehensweisen, wobei auch weitere Arten der Anpassung bzw. des Trainings der verwendeten Parameter denkbar sind. Der Bezug über eine zentrale Datenbank hat dabei noch den zusätzlichen Vorteil, dass somit auch die Erfahrungswerte anderer verwendeter Druckmaschinen miteinbezogen werden können.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: einen strukturellen Aufbau eines Bilderfassungssystems
- Figur 2:: ein Beispiel einer Anzeige mit gruppierten Fehlern einer Fehlerklasse
- Figur 3:: den Ablauf des erfindungsgemäßen Verfahrens

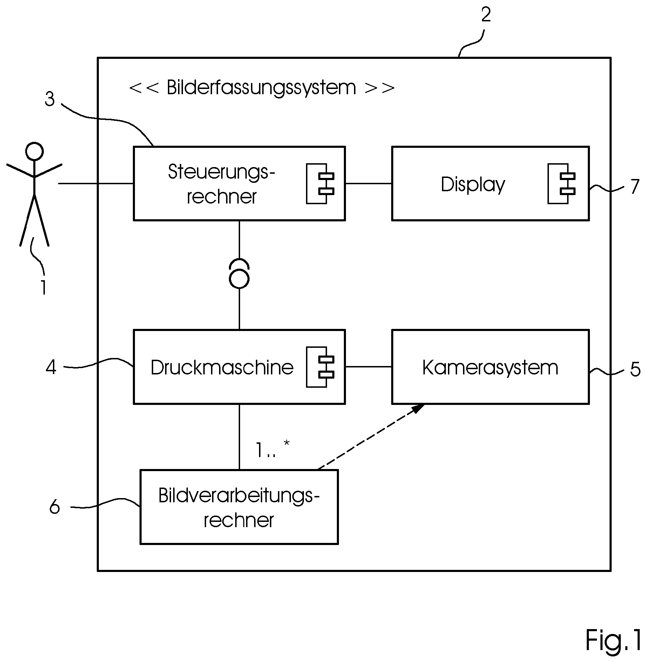

Figur 1 zeigt ein Beispiel für ein Bilderfassungssystem 2, welches das erfindungsgemäße Verfahren einsetzt. Es besteht aus mindestens einem Bildsensor 5, üblicherweise einer Kamera 5, welche in die Bogen-Druckmaschine 4 integriert ist. Die mindestens eine Kamera 5 nimmt die von der Druckmaschine 4 erzeugten Druckbilder auf und sendet die Daten an einen Rechner 3, 6 zur Auswertung. Dieser Rechner 3, 6 kann ein eigener separater Rechner 6 sein, z.B. ein oder mehrere spezialisierte Bildverarbeitungsrechner 6, oder auch mit dem Steuerungsrechner 3 der Druckmaschine 4 identisch sein. Mindestens der Steuerungsrechner 3 der Druckmaschine 4 besitzt ein Display 7, auf welchem die Ergebnisse der Bildinspektion dem Anwender 1 angezeigt werden.

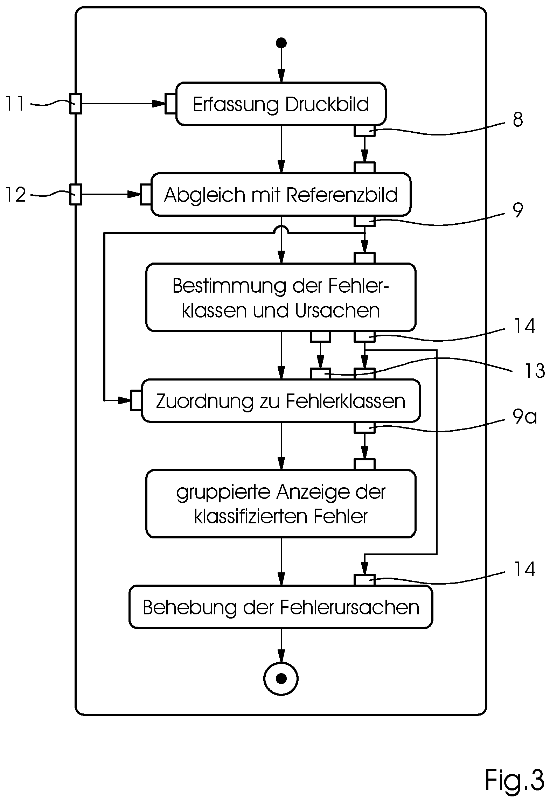

Figur 3 zeigt beispielhaft das erfindungsgemäße Verfahren in seiner bevorzugten Ausführungsform. Das Bilderfassungssystem 2 prüft dabei einen bedruckten Bogen mit dem Nutzen 11 als digitalisiertes Druckbild 8 zunächst gegen eine digitale Referenz 12. Dabei treten Abweichungen auf, die als erkannte Druckfehler 9 durch mehrere Parameter und/oder Merkmale beschrieben werden können, wie z.B.:
- ihre Größe
- ihre Lage
- ihre Farbe
- die Form
- ein Fehlerbild mit evtl. weiteren, durch Bildverarbeitungsoperationen ableitbaren, Merkmalen
- ihr zeitliches Verhalten, z.B. über wie viele Bogen sie sich erstrecken (Wiederholfehler, Rhythmen), ob sie wandern, ihre Größe, Farbe ö.Ä. ändern etc.
- auf höherer Ebene: Gruppierung von Fehlern, wie z.B. zunehmendes Schmieren, nach örtlicher/zeitlicher Nähe, Art, anderen Merkmalen ...

Aus diesen Merkmalen berechnet das Bilderfassungssystem 2 nun eine Klassifizierung einzelner Fehler 9 oder Fehlergruppen. Diese Klassifizierung erfolgt mit geeigneten Verfahren des maschinellen Lernens. Die erkannten Fehlerklassen 13 beschreiben dabei typische drucktechnische Probleme, wie z.B. Butzen, Schmieren, umgeknickte Papierkanten, usw.., welche die Fehlerursachen 14 für diese Fehler darstellen.

Weitere Fehlerklassen 13 können auch durch andere Programmteile und Auswerteverfahren im Bilderfassungssystem 2 ausgelöst werden, wie z.B. die Registermessung, Farbmessung, Überwachung defekter Düsen einer Digitaldruckmaschine, Whitelines etc..

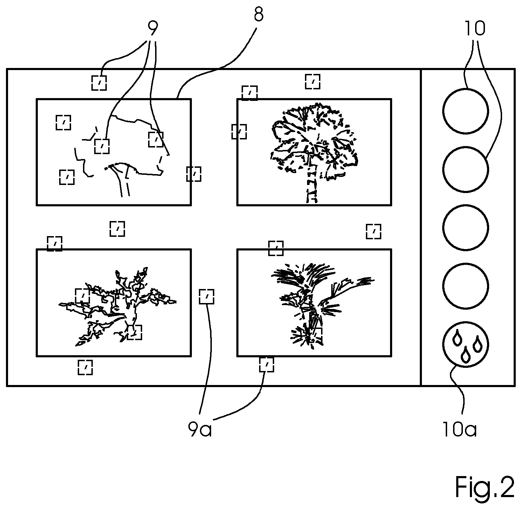

Die Fehlerklassen 13 können nun im nächsten Schritt zu verschiedenen weiteren Aktionen genutzt werden. Diese umfassen:
a) die Anzeige: Können Fehler 9 eindeutigen Fehlerklassen 13 zugewiesen werden, so werden diese Klassen 13 in der Bedienoberfläche (GUI) angezeigt. Figur 2 zeigt ein Beispiel einer solchen Bedienoberfläche. Erkannte Fehler 9 werden entsprechend markiert angezeigt. Auf der rechten Seite der GUI sind verschiedene Icons 10 die verschiedene Fehlerklassen 13 repräsentieren auswählbar. Wählt man ein bestimmtes Icon 10a, z.B. in Figur das Icon 10a für Butzenfehler werden solche klassifizierten Butzenfehler 9a gruppiert angezeigt. Die Gruppierung kann umgesetzt werden, indem nur die entsprechenden Fehler 9a angezeigt werden oder diese Fehler 9a mit einer bestimmten Farbe markiert werden, oder einem bestimmten Rahmen etc. Fehler 9, die nicht klassifiziert werden konnten, werden weiter wie bisher als reines Fehlerbild/Rechteck im Übersichtsbild o.Ä. angezeigt bzw. als eigene Klasse ("Sonstiges").
b) Einen Abhilfevorschlag: Die Maschine 4, genauer gesagt der Rechner 3, 6 kann versuchen, aus der Fehlerklasse 13 einen Reaktionsvorschlag abzuleiten, z.B. Waschen, und diesen bei Erfolg dem Bediener 1 anzuzeigen, um somit die Fehlerursache 14 zu beseitigen. Er kann dann nach manueller Prüfung des Vorschlags die Aktion auslösen.
c) Automatische Abhilfe: Als spätere Erweiterung können aus klassifizierten Fehlern 9a auch eine automatische Reaktion der Maschine 4 zur Beseitigung der Fehlerursache 14 auf den Fehler 9a ausgelöst werden, wie z.B. Farbregelung, Regelung der Wasserbalance, Waschen und weitere.
d) "Big Data": Die Daten über solche klassifizierten Fehler 9a, z.B. Häufigkeiten etc., können auch für weitergehende statistische Auswertungen genutzt werden, z.B. zur Fehlervermeidung, Maschinenüberwachung, Ersatzteil-Vorbeschaffung, besserer Voreinstellung der Maschine 4.

Die Klassifizierung und Verarbeitung in den verschiedenen Schritten oben kann durch Parameter beeinflusst werden. Die Standardparameter sind zunächst pro Maschine 4 im Auslieferzustand definiert und können danach auf verschiedene Art individuell noch weiter angepasst/gelernt werden, z.B. durch:
1. Veränderung der Voreinstellungen/Parameter an einer einzelnen Maschine 4
2. Anpassung der Parameter, über die Job-Informationen,
3. Anpassung der Parameter zentral/Druckereiweit, z.B. in einer Datenbank
4. Evtl. kann auch eine semi-automatische Klassifizierung erfolgen, bei der der Bediener 1 vom System ermittelte Klassifizierungen bewerten kann, d.h. akzeptieren, oder ablehnen. Das Klassifizierungsverfahren wird dann mit den Klassifizierungen des Anwenders 1 weiter trainiert und kann ihn so immer besser unterstützen, bzw. entlasten.

Statt eines Icons 10, 10a könnte alternativ auch ein Text erscheinen, der als Interpretation der Abweichungen sprachlich die Anzeige unterstützt. Bilder in Form von Icons 10, 10a sind allerdings schneller vom Menschen zu erfassen. Text muss erst gelesen und verstanden werden. Bilder sind zudem in allen Sprachen eindeutig, wogegen ein Text übersetzt werden muss und zu falschen oder veränderten Inhalten führen kann.

Das erfindungsgemäße Verfahren bewirkt zusammengefasst also Folgendes: Das Bilderfassungssystem 2 analysiert die Bogenbilder 11. Ein nachgelagerter Prozess wertet die dabei gefundenen Abweichungen 9 mit ihren Merkmalen, sowie weitere Daten aus anderen Teilsystemen und der Maschine 4 aus und versucht mit diesen Informationen eine Klassifikation, manuell oder/und mit maschinellen Lernverfahren, und/oder Gruppierung der Fehler 9. Die so gewonnene Information wird zur Vereinfachung der Anzeige 7 für den Bediener 1 genutzt. Anstatt zum Beispiel mehrere Butzen auf dem Druckbogen als einzelne Fehlerbilder anzuzeigen, können diese als Gruppe mit einem für den Drucker sprechendem Symbol 10a angezeigt werden. Es reicht dann, die Treffer in einem Referenzbild 12 als Ortspunkt anzuzeigen sowie in Verbindung damit ein Icon 10, 10a als Repräsentant.

Diese Vorgehensweise weist mehrere Vorteile auf:
- Schnellere Wahrnehmung von Druckabweichungen gegenüber einer definierten Referenz 12
- Reduzierte Dynamik in der Anzeige 7 ohne Informationsverlust
- Reduktion der Datenlast, weil weniger Bilder in Echtzeit
- Der Anwender 1 wird entlastet insbesondere bei hohen Geschwindigkeiten
- Auf Basis der Daten können zukünftig auch automatisierte Reaktionen, bzw. Einstellungen an der Maschine 4 ausgeführt werden, um den/die Fehler 9 abzustellen
- Mit den gesammelten Daten kann für zukünftige Entwicklungen gelernt werden, wie das System als Assistent autonom die Druckqualität nachhält.

### Bezugszeichenliste

- 1: Anwender
- 2: Bilderfassungssystem
- 3: Steuerungsrechner
- 4: Druckmaschine
- 5: Bildsensor
- 6: Bildverarbeitungsrechner
- 7: Display
- 8: digitalisiertes Druckbild / Nutzen
- 9: erkannte Druckfehler
- 9a: klassifizierte Druckfehler
- 10: Icons mit Fehlerklasse
- 10a: Icon mit bestimmter Fehlerklasse
- 11: gedrucktes Druckbild / Nutzen
- 12: digitales Referenz-/Gutbild
- 13: Fehlerklassen
- 14: Fehlerursachen

## Patentansprüche

1. Verfahren zur Bildinspektion von Druckerzeugnissen (11) in einer Bedruckstoffe verarbeitenden Maschine (4) mittels eines Rechners (3, 6), wobei im Rahmen der Bildinspektion durch ein Bilderfassungssystem (2) die produzierten Druckerzeugnisse (11) mittels mindestens eines Bildsensors (5) erfasst und digitalisiert werden, wobei der Rechner (3, 6) diese mit einem digitalen Referenzbild (12) abgleicht und im Falle von Abweichungen der erfassten Druckbilder (8) vom digitalen Referenzbild (12) die fehlerhaft erkannten Druckerzeugnisse ausgeschleust werden,
**dadurch gekennzeichnet,**
**dass** der Rechner (3, 6) die im Rahmen der Bildinspektion gefundenen Abweichungen (9), sowie weitere Daten aus anderen Teilsystemen und der Maschine (4) als gefundene Fehler (9) auswertet, daraus mittels maschineller Lernverfahren bestimmte Fehlerklassen (13) und ihre Ursachen (14) ermittelt, die in der Bildinspektion, den Daten und der Maschine (4) gefundenen Fehler (9) entsprechend den Fehlerklassen (13) zuweist und die klassifizierten, gefundenen Fehler (9a), samt Fehlerklassen (13) und Ursachen (14) einem Bediener (1) der Maschine (4) mittels eines Displays (7) als Gruppe im digitalen Referenzbild (12) mit Ortsbezug anzeigt, welcher dann spezifische Maßnahmen zur Behebung der Fehlerursachen (14) in der Maschine (4) einleitet.

2. Verfahren nach Anspruch 1,
**dadurch gekennzeichnet,**
**dass** der Rechner (3, 6) die derart klassifizierten Fehler (9a) gruppiert über das digitale Referenzbild (12) gelegt auf dem Display (7) dem Bediener (1) der Maschine (4) als Gruppe anzeigt.

3. Verfahren nach Anspruch 2,
**dadurch gekennzeichnet,**
**dass** für jede Fehlerklasse (13) auf dem Display (7) ein Icon (10, 10a) oder Textbaustein vorhanden ist, welches die Fehlerklasse (13) dem Bediener (1) offenbart und die Gruppe von einzelnen klassifizierten Fehlern (9a) jeweils in Verbindung mit dem jeweiligen Icon (10a) oder Textbaustein dem Bediener (1) angezeigt wird.

4. Verfahren nach einem der vorherigen Ansprüche,
**dadurch gekennzeichnet,**
**dass** die Fehlerklassen (13) typische drucktechnische Probleme, wie Butzen, Schmieren, umgeknickte Papierkanten, Registermessung, Farbmessung, Überwachung defekter Düsen einer Digitaldruckmaschine und Whitelines im Druckbild (11) umfassen.

5. Verfahren nach einem der vorherigen Ansprüche,
**dadurch gekennzeichnet,**
**dass** der Rechner (3, 6) aus der bestimmten Fehlerklasse (13) und der ermittelten Ursache (14) einen Reaktionsvorschlag ableitet, diesen dem Bediener (1) auf dem Display (7) anzeigt, und der Bediener (1) nach manueller Prüfung des Vorschlags diesen umsetzt.

6. Verfahren nach einem der vorherigen Ansprüche,
**dadurch gekennzeichnet,**
**dass** der Rechner (3, 6) aus der bestimmten Fehlerklasse (13) und der ermittelten Ursache (14) einen Reaktionsvorschlag ableitet, und diesen automatisch umsetzt.

7. Verfahren nach einem der vorherigen Ansprüche,
**dadurch gekennzeichnet,**
**dass** der Rechner (3, 6) Daten über die klassifizierten Fehler (9a) erfasst und statistisch auswertet und daraus Vorschläge zur Fehlervermeidung ableitet, dem Bediener (1) auf dem Display (7) anzeigt, und der Bediener (1) nach manueller Prüfung die Vorschläge umsetzt oder verwirft.

8. Verfahren nach einem der vorherigen Ansprüche,
**dadurch gekennzeichnet,**
**dass** die Klassifizierung der Fehler (9) durch den Rechner (3, 6) von Parametern abhängig ist, welche zunächst mit Standardwerten im Auslieferzustand fest definiert sind und danach mittels des Rechners (3, 6) im Rahmen der Bildinspektion angepasst, bzw. trainiert werden.

9. Verfahren nach Anspruch 8,
**dadurch gekennzeichnet,**
**dass** die Parameter vom Rechner (3, 6) mittels Veränderung der Voreinstellungen an der Maschine (4), Anpassung der Parameter über die Druckauftragsdaten, Bezug über eine zentrale Datenbank oder durch Interaktion mit dem Bediener (1) trainiert werden.

## Claims

1. Method for image inspection of printed products (11) in a machine (4) for processing printing materials by means of a computer (3, 6), the printed products (11) produced being detected and digitized by means of at least one image sensor (5) as part of the image inspection by an image detection system (2), the computer (3, 6) comparing these with a digital reference image (12) and, in the event of deviations of the detected printed images (8) from the digital reference image (12), the printed products detected as incorrect being ejected,
**characterized in that**
the computer (3, 6) evaluates the deviations (9) found during the image inspection, as well as further data from other subsystems and the machine (4), as errors (9) found, determines certain error classes (13) and their causes (14) therefrom by means of machine learning methods, assigns the defects (9) found in the image inspection, the data and the machine (4) according to the defect classes (13) and displays the classified defects (9a) found, together with the defect classes (13) and causes (14), to an operator (1) of the machine (4) by means of a display (7) as a group in the digital reference image (12) with location reference, who then initiates specific measures to rectify the causes of the defects (14) in the machine (4).

2. Method according to claim 1,
**characterized in that**
the computer (3, 6) shows the faults (9a) classified in this way, grouped via the digital reference image (12), to the operator (1) of the machine (4) as a group on the display (7).

3. Method according to claim 2,
**characterized in that**
an icon (10, 10a) or text module is present on the display (7) for each fault class (13), which reveals the fault class (13) to the operator (1) and the group of individual classified faults (9a) is displayed to the operator (1) in each case in conjunction with the respective icon (10a) or text module.

4. Method according to one of the preceding claims,
**characterized in that**
the error classes (13) include typical technical printing problems such as hickeys, smearing, folded sheet edges, register measurement, color measurement, monitoring of defective nozzles of a digital printing press and white lines in the printed image (11).

5. Method according to one of the preceding claims,
**characterized in that**
the computer (3, 6) derives a suggested reaction from the determined error class (13) and the determined cause (14), shows this to the operator (1) on the display (7), and the operator (1) implements this reaction after manually checking the suggestion.

6. Method according to one of the preceding claims,
**characterized in that**
the computer (3, 6) derives a suggested reaction from the determined error class (13) and the determined cause (14) and automatically implements it.

7. Method according to one of the preceding claims,
**characterized in that**
the computer (3, 6) records and statistically evaluates data on the classified faults (9a) and derives suggestions for fault avoidance therefrom, shows them to the operator (1) on the display (7), and the operator (1) implements or rejects the suggestions after manual checking.

8. Method according to one of the preceding claims,
**characterized in that**
the classification of the defects (9) by the computer (3, 6) is dependent on parameters that are initially fixed with default values at the time of delivery and are subsequently adjusted or trained by means of the computer (3, 6) as part of the image inspection.

9. Method according to claim 8,
**characterized in that**
the parameters are trained by the computer (3, 6) by changing the default settings on the machine (4), adjusting the parameters via the print job data, reference via a central database or by interaction with the operator (1).

## Revendications

1. Procédé d'inspection - d'images de produits imprimés (11) dans une machine (4) transformant des supports d'impression - à l'aide d'un ordinateur (3, 6) dans lequel
- dans le cadre de l'inspection d'images effectuée par un système de capture d'images (2) - les produits imprimés (11) sont capturés et numérisés à l'aide d'au moins un capteur d'images (5), sachant que l'ordinateur (3, 6) les compare avec une image de référence (12) numérique et que, en cas d'écarts entre les images d'impression capturées (8) et l'image de référence (12) numérique, les produits imprimés reconnus défectueux sont rebutés,
**caractérisé en ce**
l'ordinateur (3, 6) analyse, en tant que défauts (9) détectés, les écarts (9) détectés lors de l'inspection d'images ainsi que d'autres données provenant d'autres sous-systèmes et de la machine (4) ; qu'il détermine à partir de ces défauts, à l'aide de procédés d'apprentissage automatique, des catégories précises de défauts (13) et leurs causes (14) ; qu'il attribue aux catégories de défauts (13) correspondantes les défauts (9) détectés lors de l'inspection d'image, dans les données et sur la machine (4), et qu'il affiche les défauts (9a) détectés et classés, ainsi que les catégories de défauts (13) et les causes (14), à un opérateur (1) de la machine (4) au moyen d'un écran (7) sous forme de groupe dans l'image de référence numérique (12) avec référence géographique, lequel opérateur prend ensuite des mesures spécifiques pour éliminer les causes (14) des défauts dans la machine (4).

2. Procédé selon la revendication 1,
**caractérisé en ce**
pour l'opérateur (1) de la machine (4), l'ordinateur (3, 6) affiche sur l'écran (7), sous forme de groupe, les défauts (9a) ainsi classés réunis sur l'image de référence numérique (12).

3. Procédé selon la revendication 2,
**caractérisé en ce**
**qu'**il existe sur l'écran (7), pour chaque catégorie de défaut (13), une icône (10, 10a) ou un bloc de texte indiquant la catégorie de défaut (13) à l'opérateur (1), et que le groupe de défauts individuels classés (9a) est affiché à l'opérateur (1) en association avec l'icône (10a) ou le bloc de texte correspondant(e).

4. Procédé selon l'une des revendications précédentes,
**caractérisé en ce**
les catégories de défauts (13) comprennent des problèmes typiques liés à la technique l'impression tels que les pétouilles, bavures, les rebords de feuille pliés, la mesure du repérage, la colorimétrie, la surveillance des buses défectueuses d'une presse numérique et les lignes blanches sur l'image d'impression (11).

5. Procédé selon l'une des revendications précédentes,
**caractérisé en ce**
l'ordinateur (3, 6) déduit une proposition de réaction à partir de la catégorie précise de défaut identifiée (13) et de la cause déterminée (14), qu'il l'affiche sur l'écran (7) pour l'opérateur (1) et que ce dernier (1), après avoir vérifié manuellement la proposition, la met en œuvre.

6. Procédé selon l'une des revendications précédentes,
**caractérisé en ce**
l'ordinateur (3, 6) déduit une proposition de réaction à partir de la catégorie précise de défaut identifiée (13) et de la cause déterminée (14), et la met automatiquement en œuvre.

7. Procédé selon l'une des revendications précédentes,
**caractérisé en ce**
l'ordinateur (3, 6) enregistre et analyse statistiquement des données relatives aux défauts classifiés (9a), qu'il en déduit des propositions pour éviter ces défauts, les affiche sur l'écran (7) à l'intention de l'opérateur (1), et que l'opérateur (1), après vérification manuelle, applique ou rejette ces propositions.

8. Procédé selon l'une des revendications précédentes,
**caractérisé en ce**
la classification des défauts (9) par l'ordinateur (3, 6) dépend de paramètres qui sont initialement définis de manière fixe et affectés de valeurs par défaut à la livraison, puis ajustés ou « entraînés » à l'aide de l'ordinateur (3, 6) dans le cadre de l'inspection d'images.

9. Procédé selon la revendication 8,
**caractérisé en ce**
les paramètres de l'ordinateur (3, 6) sont ajustés en modifiant les préréglages de la machine (4), en adaptant les paramètres à partir des données de la commande d'impression, en les récupérant depuis une base de données centrale, ou encore par le biais d'une interaction avec l'opérateur (1).
